# EUROPÄISCHE PATENTSCHRIFT

(11) **EP 2 758 262 B1**
(45) Veröffentlichungstag und Bekanntmachung des Hinweises auf die Patenterteilung: **14.10.2015**
(21) Anmeldenummer: 12743900.8
(22) Anmeldetag: 03.08.2012
(51) Int. Cl.: B60K 1/04

(54) **BATTERIEKASTEN, ELEKTRO- ODER HYBRIDFAHRZEUG UND VERFAHREN ZUR MONTAGE EINES BATTERIEKASTENS**
BATTERY BOX, ELECTRIC OR HYBRID VEHICLE AND METHOD FOR INSTALLING A BATTERY BOX
COFFRE DE BATTERIE, VÉHICULE ÉLECTRIQUE OU HYBRIDE ET PROCÉDÉ DE MONTAGE D'UN COFFRE DE BATTERIE

(30) Priorität: 20.09.2011 DE 102011113799
(43) Veröffentlichungstag der Anmeldung: 30.07.2014
(73) Patentinhaber: Volkswagen Aktiengesellschaft, 38440 Wolfsburg (DE)
(72) Erfinder: AUST, Maileen, 38440 Wolfsburg (DE); MAUSOLF, Karsten, 29614Soltau (DE); GILDEMANN, Dirk, 38444 Wolfsburg (DE); JÄSCHKE, Dirk, 38446 Wolfsburg (DE)
(86) Internationale Anmeldenummer: PCT/EP2012/003311
(87) Internationale Veröffentlichungsnummer: WO 2013/041166

(56) Entgegenhaltungen:
- DE-A1- 10 261 630
- DE-A1-102009 038 834
- FR-A1- 2 964 610
- US-A1- 2009 315 359

## Beschreibung

Die Erfindung betrifft einen Batteriekasten eines Elektro- oder Hybridfahrzeugs, ein Elektro- oder Hybridfahrzeug und ein Verfahren zur Montage eines Batteriekastens in einem Elektro- oder Hybridfahrzeug.

In Elektro- oder Hybridfahrzeugen wird elektrische Energie in einer so genannten Traktionsbatterie gespeichert, wobei insbesondere eine elektrische Maschine zum Antrieb des Elektro- oder Hybridfahrzeugs aus der Traktionsbatterie mit elektrischer Energie versorgt wird.

In Elektrofahrzeugen und so genannten Plug-In-Hybridfahrzeugen besteht die Notwendigkeit, die Traktionsbatterie aus einem externen Stromnetz mit elektrischen Energie zu laden. Hierzu ist es notwendig, eine von außen zugängliche Ladeschnittstelle des Elektro- oder Hybridfahrzeugs, an welche z.B. ein Ladestecker einer Ladestation angeschlossen werden kann, elektrisch mit der Traktionsbatterie zu verbinden. Dies kann mittels elektrischer Leiter erfolgen, die die von außen zugängliche Ladeschnittstelle mit einer Verteilereinrichtung im Elektro- oder Hybridfahrzeug oder direkt mit der Traktionsbatterie verbinden.

Die Traktionsbatterie kann mehrere Batteriezellen umfassen, die innerhalb eines Batteriekastens angeordnet sein können.

So offenbart die DE 10 2009 038 834 A1 ein Kraftfahrzeug mit einem Chassisrahmen, der ein Frontmodul und ein Heckmodul aufweist, die über ein Zentralmodul miteinander verbunden sind, das wenigstens einen Speicher aufnimmt, aus dem ein Antriebsaggregat des Kraftfahrzeugs mit Energie gespeist wird, wobei sowohl das Frontmodul als auch das Heckmodul jeweils wenigstens ein Antriebsaggregat tragen.

Die DE 102 61 630 A1 offenbart ein Trägermodul zur Montage in einem Kraftfahrzeug, welches einen oberhalb einer Bodenbegrenzungslinie angeordneten Karosserieboden zu einer zumindest teilweisen Begrenzung eines Insassenbodenbereiches enthält, wobei der Karosserieboden einen sich im Fahrer/Beifahrerbereich erstreckenden vorderen Karosserieboden und einen sich im Rücksitzbereich erstreckenden hinteren Karosserieboden enthält, wobei der vordere Karosserieboden höher als der hintere Karosserieboden angeordnet ist, wobei das Trägermodul in einem zwischen dem vorderen Karosserieboden und der Bodenbegrenzungslinie erstreckenden Bereich angeordnet ist.

Bei der Montage des Elektro- oder Hybridfahrzeugs wird in der Regel die von außen zugängliche Ladeschnittstelle an der Karosserie befestigt, wobei an der Ladeschnittstelle bereits elektrische Leiter oder Kabel angeschlossen sein können. Dann wird ein Fahrwerk, auf welchem ein Batteriekasten angeordnet ist, in die Karosserie eingefahren. Hiernach wird die elektrische Verbindung zwischen Ladeschnittstelle und der Traktionsbatterie hergestellt. Es ergibt sich nachteilig, dass während des Montagevorgangs bereits an der Ladeschnittstelle angeschlossene Leiter zeitaufwändig, z.B. durch Wegbinden, gesichert werden müssen. Sind an der Ladeschnittstelle noch keine Leiter angeschlossen, so ergibt sich nachteilig, dass diese erst nach dem Einfahren des Fahrwerks verlegt werden können. Hierfür steht jedoch nach dem Einfahren nur wenig Montageraum zur Verfügung, was den Montagevorgang ebenfalls zeitaufwändiger macht.

Es stellt sich das technische Problem, einen Batteriekasten, ein Elektro- oder Hybridfahrzeug sowie Verfahren zur Montage eines Batteriekastens in dem Elektro- oder Hybridfahrzeug zu schaffen, welches ein weniger Montagezeit beanspruchendes Montieren der Traktionsbatterie in dem Elektro- oder Hybridfahrzeug ermöglicht.

Die Lösung des technischen Problems ergibt sich durch die Gegenstände mit den Merkmalen der Ansprüche 1, 7 und 8. Weitere vorteilhafte Ausgestaltungen der Erfindung ergeben sich aus den Unteransprüchen.

Vorgeschlagen wird ein Batteriekasten eines Elektro- oder Hybridfahrzeugs. Das Elektro- oder Hybridfahrzeug weist eine Karosserie oder ein Chassis auf, wobei der Batteriekasten innerhalb der Karosserie anordenbar ist. Beispielsweise kann der Batteriekasten in einem Frontbereich oder einem Heckbereich des Elektro- oder Hybridfahrzeugs angeordnet werden. Auch kann der Batteriekasten mehrere Teilbatteriekästen umfassen, die z.B. in unterschiedlichen Bereichen des Elektro- oder Hybridfahrzeugs angeordnet sein können.

Der Batteriekasten weist mindestens einen Batteriekastenkörper auf. Innerhalb des Batteriekastenkörpers kann mindestens eine Batteriezelle einer Traktionsbatterie oder die gesamte Traktionsbatterie anordenbar sein. Mittels der mindestens einen Batteriezelle der Traktionsbatterie oder der Traktionsbatterie ist insbesondere ein Antriebsaggregat, beispielsweise ein dreiphasiger Elektromotor, des Elektro- oder Hybridfahrzeugs mit elektrischer Energie versorgbar.

Hierbei kann der Batteriekasten eine elektrische Schnittstelle, z.B. eine Buchse, aufweisen, an welche z.B. ein elektrischer Leiter, z.B. mittels eines Steckers, angeschlossen werden kann. Die elektrische Schnittstelle des Batteriekastens kann hierbei einer Zuführung elektrischer Energie aus einem externen Netz oder während eines so genannten Rekuperationsbetriebs, also zum Aufladen der Batterie, dienen. Hierbei kann der Batteriekasten über die Schnittstelle direkt mit dem externen elektrischen Netz verbindbar sein.

Auch ist vorstellbar, dass das Elektro- oder Hybridfahrzeug eine elektrische Verteilereinrichtung aufweist, die eine elektrische Schnittstelle, z.B. eine Buchse, aufweist. Die elektrische Schnittstelle der Verteilereinrichtung kann hierbei einer Verteilung elektrischer Energie aus einem externen Netz, dienen, wobei die elektrische Verteilereinrichtung elektrische Energie aus dem externen Netz auch an die Traktionsbatterie übertragen kann. Hierbei ist der Batteriekasten über die Verteilereinrichtung indirekt mit dem externen elektrischen Netz verbindbar.

Erfindungsgemäß weist der Batteriekasten einen Ladestutzen auf. Der Ladestutzen kann hierbei lösbar oder nicht lösbar an dem Batteriekastenkörper befestigt sein. Auch können Ladestutzen und Batteriekastenkörper als ein gemeinsames Bauteil ausgebildet sein. Auch kann der Ladestutzen vom Batteriekasten ausgebildet werden.

Der Batteriekasten ist derart in einer Karosserie des Elektro- oder Hybridfahrzeugs anordenbar und befestigbar, dass der Ladestutzen eine Ladesteckeröffnung der Karosserie mit dem Batteriekastenkörper verbindet. Insbesondere erstreckt sich der Ladestutzen im montierten Zustand des Batteriekastens im Elektro- oder Hybridfahrzeug von der Ladesteckeröffnung in der Karosserie zum Batteriekastenkörper, insbesondere zu einem vorbestimmten Bereich des Batteriekastenkörpers. Der vorbestimmte Bereich kann Teil einer Außenfläche des Batteriekastenkörpers sein. Der montierte Zustand des Batteriekastens bezeichnet hierbei einen Zustand, in welchem der Batteriekasten in die Karosserie des Elektro- oder Hybridfahrzeuges eingefahren und in diesem befestigt ist. Die Karosserie des Elektro- oder Hybridfahrzeugs weist hierbei die Ladesteckeröffnung auf, durch welche ein z.B. mit einer externen Ladestation elektrisch verbundener Ladestecker von außen in eine Ladebuchse des Elektro- oder Hybridfahrzeugs eingesteckt werden kann, wobei die Ladebuchse hierbei in oder an der Ladesteckeröffnung der Karosserie, z.B. karosserieinnenseitig, angeordnet ist.

Der Ladestutzen ist ein Mittel zur Führung mindestens eines elektrischen Leiters. Hierbei kann der elektrische Leiter in oder an dem Ladestutzen geführt und gegebenenfalls mechanisch befestigt werden. Vorzugsweise ist der Ladestutzen rohrförmig ausgebildet, wobei ein Querschnitt des Ladestutzens z.B. kreisförmig, ovalförmig oder rechteckig sein kann. Auch kann der Ladestutzen einen anderen Querschnitt aufweisen. Der Ladestutzen kann mindestens einen Führungskanal aufweisen, der innerhalb einer oder mehrere Wände des Ladestutzens verläuft oder durch diese ausgebildet wird. In dem Führungskanal kann z.B. ein elektrischer Leiter verlegt und somit geführt werden.

Ist der Ladestutzen rohrförmig oder als Rohr ausgeführt, so kann der Ladestutzen an dem karosserieseitigen Ende eine karosserieseitige Öffnung und dem batteriekastenseitigen Ende eine batterieseitige Öffnung aufweisen. Durch die Öffnungen kann ein elektrischer Leiter in den Ladestutzen hinein oder aus diesem herausgeführt werden. Im montierten Zustand kann die karosserieseitige Öffnung mit der Ladesteckeröffnung fluchten.

So kann im montierten Zustand des Batteriekastens ein elektrischer Leiter von dem karosserieseitigen Ende des Ladestutzens zum Batteriekastenkörper innerhalb oder entlang des Ladestutzens geführt werden. Hierbei kann der elektrische Leiter an eine elektrische Schnittstelle des Elektro- oder Hybridfahrzeugs angeschlossen werden. Diese Schnittstelle kann hierbei eine Schnittstelle des Batteriekastens sein. Verbindet der Ladestutzen im montierten Zustand des Batteriekastens die Ladesteckeröffnung der Karosserie direkt mit der elektrischen Schnittstelle des Batteriekastens oder einem Bereich des Batteriekastenkörpers, in welchem die Schnittstelle angeordnet ist, so ergibt sich in vorteilhafter Weise, dass mechanisch geschützte Führung des elektrischen Leiters zur elektrischen Schnittstelle des Batteriekastens möglich ist. Die Schnittstelle kann hierbei aber auch eine weitere Schnittstelle des Elektro- oder Hybridfahrzeugs sein, die nicht an dem Batteriekasten angeordnet ist, z.B. eine Schnittstelle einer Verteilereinrichtung. Hierbei ergibt sich durch den Ladestutzen in vorteilhafter Weise, dass der elektrische Leiter mechanisch geschützt zu dem Batteriekastenkörper geführt wird, wobei er dann aus dem Ladestutzen herausgeführt und zu weiteren Schnittstelle weiterverlegt werden kann.

Insgesamt ergibt sich durch die erfindungsgemäße Ausbildung in vorteilhafter Weise, wie nachfolgend näher erläutert, eine verbesserte und weniger zeitaufwändige Montage des Batteriekastens im Elektro- oder Hybridfahrzeugs, da elektrische Leiter zeitlich vor dem Einfahren des Batteriekastens in die Karosserie in oder an dem Ladestutzen und gegebenenfalls auch am Batteriekastenkörper verlegt werden können. Somit kann in vorteilhafter Weise der Batteriekastenkörper mit Ladestutzen in die Karosserie eingefahren werden, wobei nach dem Einfahren die bereits verlegten Kabel einfach durch die Ladesteckeröffnung von außen zugänglich sind, da im montieren Zustand das karosserieseitige Ende des Ladestutzens im Bereich der Ladesteckeröffnung der Karosserie angeordnet ist. Hierdurch entfällt in vorteilhafter Weise das vor dem Einfahren ansonsten notwendige Sichern, z.B. Wegbinden, der elektrischen Leiter bzw. das nach dem Einfahren aufgrund des geringen Montageraums zeitaufwändige Verlegen der elektrischen Leiter.

In einer weiteren Ausführungsform weist der Ladestutzen an einem karosserieseitigen Ende des Ladestutzens eine Ladeschnittstelle auf. Hierbei kann die Ladeschnittstelle des Ladestutzens einer Herstellung einer elektrischen Verbindung mit einem externen elektrischen Netz dienen, also von außen zugänglich sein. Beispielsweise kann die Ladeschnittstelle des Ladestutzens als Ladebuchse oder Ladedose ausgeführt sein, in welche ein Ladestecker einer externen elektrischen Ladestation einsteckbar ist. An die Ladeschnittstelle des Ladestutzens kann hierbei vor dem Einfahren des Batteriekastens in die Karosserie bereits der elektrische Leiter zur Verbindung der Ladeschnittstelle mit einer elektrischen Schnittstelle des Elektro- oder Hybridfahrzeugs angeschlossen werden. Allerdings kann auch noch nach dem Einfahren an die Ladeschnittstelle des Ladestutzens der elektrische Leiter zur Verbindung der Ladeschnittstelle mit einer elektrischen Schnittstelle des Elektro- oder Hybridfahrzeugs angeschlossen werden. Hierdurch ergibt sich eine weiter vereinfachte Montage, da nicht nach dem Einfahren noch eine Ladeschnittstelle montiert werden muss.

In einer weiteren Ausführungsform umfasst der Batteriekasten zusätzlich mindestens einen ersten elektrischen Leiter. Mittels des ersten elektrischen Leiters ist eine elektrische Verbindung zwischen dem karosserieseitigen Ende des Ladestutzens, beispielsweise von der vorhergehend beschriebenen Ladeschnittstelle des Ladestutzens, und einer elektrischen Schnittstelle innerhalb des Elektro- oder Hybridfahrzeugs herstellbar. Hierbei wird der erste elektrische Leiter mittels des Ladestutzens von dem karosserieseitigen Ende des Ladestutzens zumindest bis zum Batteriekastenkörper geführt. Die elektrische Schnittstelle kann hierbei beispielsweise ein an dem Batteriekasten selbst angeordnete elektrische Schnittstelle oder eine Schnittstelle einer weiteren Einrichtung, z.B. einer Verteilereinrichtung, des Elektro- oder Hybridfahrzeugs sein.

Der erste elektrische Leiter kann hierbei innerhalb des Ladestutzens oder an diesem entlang verlegt und gegebenenfalls mechanisch befestigt sein.

Hierdurch ergibt sich in vorteilhafter Weise, dass ein Batteriekasten mit bereits verlegten und gegebenenfalls bereits angeschlossenen elektrischen Leitern bei der Montage in die Karosserie eingefahren wird, wodurch sich ebenfalls ein Zeitersparnis ergibt.

In einer weiteren Ausführungsform weist der Ladestutzen, wie vorhergehend beschrieben, an dem karosserieseitigen Ende eine karosserieseitige Öffnung und dem batteriekastenseitigen Ende eine batterieseitige Öffnung auf. Weiter weist der der Ladestutzen an einem batteriekastenseitigen Ende mindestens eine Zusatzöffnung auf. Beispielsweise kann der Ladestutzen im montierten Zustand des Batteriekastens die Ladesteckeröffnung mit einer an dem Batteriekasten angeordneten elektrischen Schnittstelle verbinden, wobei ein elektrischer Leiter durch die batterieseitige Öffnung an die an dem Batteriekasten angeordnete Schnittstelle geführt und dann mit dieser elektrisch verbunden werden kann. Durch die Zusatzöffnung können in vorteilhafter Weise weitere elektrische Leiter aus oder in den Ladestutzen geführt werden, z.B. Signalleitungen, die zur signaltechnischen Verbindung z.B. eines an die Ladeschnittstelle angeschlossenen Ladesteckers mit Steuergeräten des Elektro- oder Hybridfahrzeugs dienen, oder weitere elektrische Leiter, die mit weiteren elektrischen Schnittstellen des Elektro- oder Hybridfahrzeugs verbunden werden.

Hierdurch ergibt sich in vorteilhafter Weise, dass eine Vielzahl elektrischer Leiter, z.B. auch von Signalleitern, einheitlich von dem Batteriekastenkörper, insbesondere von einem vorbestimmten Bereich des Batteriekastenkörpers, zur Ladesteckeröffnung geführt werden können. Da diese bereits vor dem Einfahren des Batteriekastens in die Karosserie verlegt werden können, ergibt sich somit, wie vorhergehend erläutert, eine vereinfachte und wenig zeitaufwändige Montage.

In einer weiteren Ausführungsform umfasst der Batteriekasten einen ersten elektrischen und mindestens einen weiteren elektrischen Leiter. Mittels des ersten elektrischen Leiters ist eine elektrische Verbindung zwischen dem karosserieseitigen Ende des Ladestutzens, beispielsweise einer vorhergehend beschriebenen Ladeschnittstelle des Ladestutzens, und einer elektrischen Schnittstelle des Batteriekastens herstellbar. Mittels des mindestens einen weiteren elektrischen Leiters ist eine elektrische Verbindung zwischen dem karosserieseitigen Ende des Ladestutzens, beispielsweise der vorhergehend beschriebenen Ladeschnittstelle des Ladestutzens, und einer weiteren elektrischen Schnittstelle des Elektro- oder Hybridfahrzeugs herstellbar. Der erste elektrische Leiter wird mittels des Ladestutzens von dem karosserieseitigen Ende des Ladestutzens zur elektrischen Schnittstelle des Batteriekastens geführt. Hierbei verbindet der Ladestutzen im montierten Zustand die Ladesteckeröffnung und die elektrische Schnittstelle des Batteriekasten oder einen vorbestimmten Bereich des Batteriekastens, in welchem die elektrische Schnittstelle angeordnet ist.

Der mindestens eine weitere elektrische Leiter wird mittels des Ladestutzens von dem karosserieseitigen Ende des Ladestutzens zum Batteriekasten geführt wird, wobei der mindestens eine weitere elektrische Leiter durch die batterieseitige Öffnung oder die Zusatzöffnung aus dem Ladestutzen herausgeführt oder von diesem weggeführt wird. Hierbei kann der weitere elektrische Leiter außerhalb des Batteriekastenkörpers aus dem Ladestutzen herausgeführt werden.

Somit ergibt sich in vorteilhafter Weise, dass sowohl der erste als auch der mindestens eine weitere elektrische Leiter gemeinsam mittels des Ladestutzens zum Batteriekastenkörper geführt werden können, wobei der mindestens eine weitere elektrische Leiter dann aus dem Ladestutzen herausgeführt und, z.B. an dem Batteriekastenkörper entlang, weiter verlegt werden kann. Hierbei kann der erste oder der mindestens eine weitere elektrische Leiter einem Transport von elektrischer Leistung oder einer Leitung von Signalen dienen.

Hierdurch ergibt sich in vorteilhafter Weise, dass eine Vielzahl elektrischer Leiter, z.B. auch von Signalleitern, einheitlich von dem Batteriekastenkörper zur Ladesteckeröffnung geführt werden können. Da diese bereits vor dem Einfahren des Batteriekastens in die Karosserie verlegt werden können, ergibt sich somit, wie vorhergehend erläutert, eine vereinfachte und wenig zeitaufwändige Montage.

In einer weiteren Ausführungsform ist der Ladestutzen rohrförmig ausgebildet ist, wobei der Ladestutzen mindestens zwei räumlich getrennte Führungskanäle aufweist oder ausbildet. Hierbei kann beispielsweise in einem ersten Führungskanal ein erster elektrischer Leiter verlegt werden, mittels dessen eine elektrische Verbindung zwischen dem karosserieseitigen Ende des Ladestutzens, beispielsweise einer vorhergehend beschriebenen Ladeschnittstelle des Ladestutzens, und einer elektrischen Schnittstelle des Batteriekastens herstellbar ist. In einem weiteren Führungskanal kann ein weiterer elektrischer Leiter verlegt werden, mittels dessen eine elektrische Verbindung zwischen dem karosserieseitigen Ende des Ladestutzens, beispielsweise der vorhergehend beschriebenen Ladeschnittstelle des Ladestutzens, und einer weiteren elektrischen Schnittstelle des Elektro- oder Hybridfahrzeugs herstellbar ist. Vorzugsweise weist der Ladestutzen ausschließlich im Bereich des weiteren Führungskanals die vorhergehend beschriebene Zusatzöffnung auf. Hierdurch ergibt sich in vorteilhafter Weise ein sicheres Verlegen und Anordnen der elektrischen Leiter, da diese räumlich getrennt voneinander verlegt werden können und hierdurch mechanische Einflüsse, beispielsweise drch das Verlegen selbst, oder thermische Einflüsse, beispielsweise bei einer Überhitzung, der einzelnen Leiter aufeinander minimiert werden können. Auch können elektromagnetische Einflüsse der Leiter aufeinander minimiert werden.

Weiter vorgeschlagen wird ein Elektro- oder Hybridfahrzeug, mit einem Batteriekasten der vorstehend beschriebenen Art. Im Besonderen weist das Elektro- oder Hybridfahrzeug eine Karosserie auf. Innerhalb der Karosserie ist ein Batteriekasten anordenbar, wobei der Batteriekasten mindestens einen Batteriekastenkörper aufweist. Die Karosserie weist eine Ladesteckeröffnung auf.

Vorteilhaft weist der Batteriekasten einen Ladestutzen auf, wobei der Batteriekasten derart in einer Karosserie des Elektro- oder Hybridfahrzeugs anordenbar ist oder angeordnet ist, dass der Ladestutzen die Ladesteckeröffnung der Karosserie mit dem Batteriekastenkörper, insbesondere mit einem vorbestimmten Bereich, der z.B. Teil der Außenfläche des Batteriekastenkörpers sein kann, verbindet. Hierbei ist der Batteriekastenkörper im montierten Zustand räumlich entfernt von der Ladesteckeröffnung angeordnet.

Der Batteriekasten des Elektro- oder Hybridfahrzeugs kann hierbei wie vorhergehend beschrieben ausgeführt werden.

Hierdurch ergibt sich in vorteilhafter Weise ein Elektro- oder Hybridfahrzeug, welches, wie vorhergehend beschrieben, einfach und insbesondere weniger zeitaufwändig montiert werden kann.

Weiter vorgeschlagen wird ein Verfahren zur Montage eines Batteriekastens in einem Elektro- oder Hybridfahrzeug. Der Batteriekasten weist einen Batteriekastenkörper und einen Ladestutzen auf. Der Ladestutzen weist an einem karosserieseitigen Ende des Ladestutzens eine Ladeschnittstelle auf. Auch kann die Ladeschnittstelle an dem karosserieseitigen Ende des Ladestutzens montiert, beispielsweise befestigt, werden.

In einem ersten Schritt wird der Batteriekasten auf einem Fahrwerkrahmen angeordnet. In einem zweiten Schritt wird an die karosserieseitige Ladeschnittstelle des Ladestutzens mindestens ein elektrischer Leiter angeschlossen, wobei der elektrische Leiter in oder an dem Ladestutzen zum Batteriekastenkörper geführt wird. Beispielsweise kann die karosserieseitige Ladeschnittstelle des Ladestutzens mittels eines elektrischen Leiters mit einer elektrischen Schnittstelle des Elektro- oder Hybridfahrzeugs verbunden werden. Hierfür wird der elektrische Leiter in oder an dem Ladestutzen geführt. Beispielsweise kann der elektrische Leiter innerhalb eines rohrförmigen Ladestutzens verlegt werden und gegebenenfalls an diesem befestigt werden. Alternativ kann der elektrische Leiter an dem Ladestutzen entlang geführt werden und gegebenenfalls an diesem befestigt werden. Werden mehrere elektrische Leiter verlegt, so können alle, einige oder nur ein elektrischer Leiter in dem Ladestutzen geführt werden, wobei die verbleibenden elektrischen Leiter außerhalb und entlang des Ladestutzens verlegt werden können.

Der elektrische Leiter kann im zweiten Schritt noch aus dem Ladestutzen heraus oder von dem Ladestutzen weg an dem Batteriekastenkörper entlang verlegt und befestigt werden, beispielsweise um mit einer im Elektro- oder Hybridfahrzeug angeordneten elektrischen Schnittstelle verbunden zu werden.

Hierbei können der erste und der zweiten Schritt auch zeitlich vertauscht ausgeführt werden.

In einem dritten Schritt wird der Fahrwerkrahmen mit dem darauf angeordneten Batteriekasten und den bereits verlegten elektrischen Leitern in die Karosserie eingefahren.

Hierbei können nach dem dritten Schritt die bereits verlegten elektrischen Leiter derart an der Karosserie und/oder an dem Batteriekastenkörper und/oder weiteren Fahrzeugteilen befestigt werden, dass eine Bewegung in Richtung einer Fahrzeughochachse nicht mehr möglich ist. Die Fahrzeughochachse verläuft hierbei parallel zu einer Gierachse des Fahrzeugs.

In einem vierten Schritt wird die karosserieseitige Ladeschnittstelle des Ladestutzens an der Karosserie befestigt.

Abschließend kann noch einer oder können noch mehrere der folgenden weiteren Schritte ausgeführt werden:
- zusätzliches Befestigen der elektrischen Leiter an der Karosserie und/oder dem Batteriekasten und/oder weiteren Fahrzeugteilen,
- Montieren einer Ladeklappe, wobei die Ladeklappe zur Abdeckung der Ladesteckeröffnung und der darin oder daran angeordneten Ladeschnittstelle des Ladestutzens dient,
- Verbinden eines oder mehrerer bereits verlegter elektrischer Leiter mit den korrespondierenden elektrischen Schnittstellen im Elektro- oder Hybridfahrzeug, beispielsweise Einstecken der bereits verlegten Leiter in die korrespondierenden Buchsen.

Das Befestigen der elektrischen Leiter kann hierbei lösbar oder unlösbar erfolgen. Vorzugsweise werden die elektrischen Leiter über Rastverbindungen oder Clipsverbindungen befestigt. Der oder die elektrische Leiter können z.B. als Kabel ausgebildet sein.

Hierdurch ergibt sich in vorteilhafter Weise ein einfaches und weniger zeitaufwändiges Montieren des Batteriekastens im Elektro- oder Hybridfahrzeug.

In einer weiteren Ausführungsform wird in dem zweiten Schritt die karosserieseitige Ladeschnittstelle des Ladestutzens mittels eines ersten elektrischen Leiters mit einer elektrischen Schnittstelle des Batteriekastens verbunden. Hierbei verbindet der Ladestutzen im montierten Zustand dann die Ladesteckeröffnung, durch die ein externer Ladestecker z.B. einer externen Ladestation von außen in die karosserieseitige Ladeschnittstelle zugeführt oder gesteckt werden kann, mit der elektrischen Schnittstelle des Batteriekastens. Somit ist in einfacher Weise eine elektrische Verbindung zwischen einem externen elektrischen Netz und dem Batteriekasten herstellbar, mittels welcher z.B. elektrische Energie zum Aufladen einer Batteriezelle einer Traktionsbatterie oder der gesamten Traktionsbatterie in das Elektro- oder Hybridfahrzeug geleitet werden kann.

Alternativ oder kumulativ wird die karosserieseitige Ladeschnittstelle des Ladestutzens mittels eines weiteren elektrischen Leiters mit einer weiteren elektrischen Schnittstelle des Elektro- oder Hybridfahrzeugs verbunden. Hierzu kann der weitere elektrische Leiter ebenfalls in oder an dem Ladestutzen verlegt oder geführt werden. Zusätzlich kann der weitere elektrische Leiter dann aber an einem batteriekastenseitigen Ende, beispielsweise aus einer batterieseitigen Öffnung oder einer Zusatzöffnung, aus dem Ladestutzen heraus und an dem Batteriekastenkörper entlang geführt werden.

Hierdurch ergibt sich in vorteilhafter Weise, dass mehrere elektrische Leiter gemeinsam in oder an dem Ladestutzen geführt werden können, wodurch sich wiederum ein einfaches und weniger zeitaufwändiges Montieren des Batteriekastens ergibt.

Die Erfindung wird anhand mehrerer Ausführungsbeispiele näher erläutert. Die Figuren zeigen:
- Fig. 1: eine perspektivische Ansicht eines erfindungsgemäßen Batteriekastens,
- Fig. 2: eine Explosionsansicht eines Teils eines erfindungsgemäßen Elektrofahrzeugs,
- Fig. 3: eine schematische Seitenansicht eines erfindungsgemäßen Batteriekastens und
- Fig. 4: eine Seitenansicht eines Elektro- oder Hybridfahrzeugs.

Nachfolgend bezeichnen gleiche Bezugszeichen Elemente mit gleichen oder ähnlichen technischen Merkmalen.

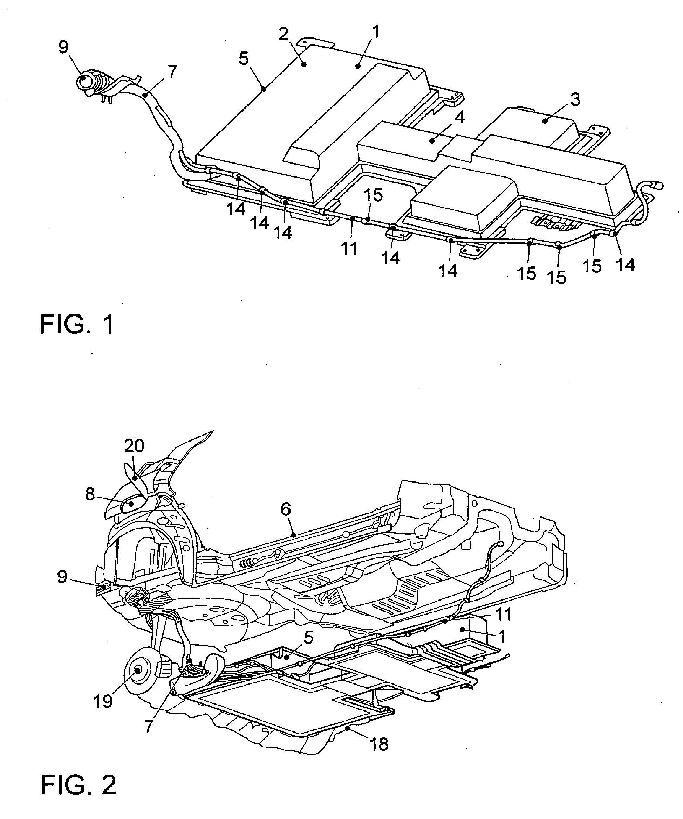

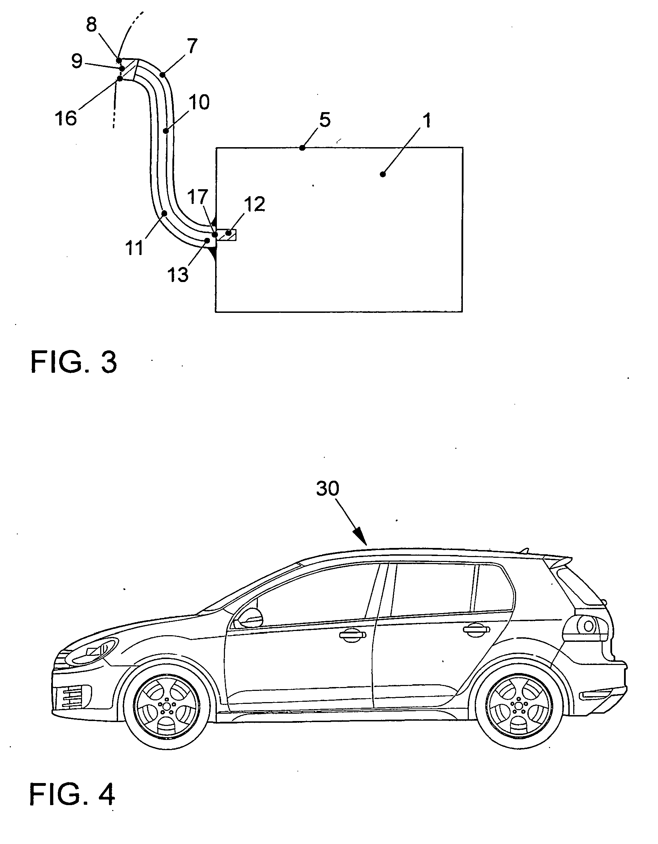

In Fig. 1 ist eine perspektivische Ansicht eines erfindungsgemäßen Batteriekastens 1 dargestellt. Der Batteriekasten 1 umfasst hierbei einen heckseitigen Teil 2, einen frontseitigen Teil 3 und einen Mittelteil 4. Weiter weist der Batteriekasten 1 einen Batteriekastenkörper 5 auf. Innerhalb des Batteriekastenkörpers 5 sind nicht dargestellte Batteriezellen einer Traktionsbatterie anordenbar. Der Batteriekasten 1 ist innerhalb einer Karosserie 6 eines Elektro- oder Hybridfahrzeugs 30 (s. Fig. 4) anordenbar (siehe Fig. 2).

Der Batteriekasten 1 weist einen Ladestutzen 7 auf, der an dem Batteriekastenkörper 5, insbesondere im Bereich des heckseitigen Teils 7 des Batteriekastens 1, befestigt ist. Der Batteriekasten 1 ist derart in der Karosserie 6 des Elektro- oder Hybridfahrzeugs 30 anordenbar, dass der Ladestutzen 7 eine Ladesteckeröffnung 8 (siehe Fig. 2) der Karosserie 6 mit dem Batteriekastenkörper 5 verbindet, sich also von der Ladesteckeröffnung 8 bis zum Batteriekastenkörper 5 erstreckt. Der Batteriekasten 1 kann hierbei z.B. mittels eines Spritzgussverfahrens hergestellt werden.

Der Ladestutzen 7 weist an einem karosserieseitigen Ende des Ladestutzens 7 eine als Ladebuchse ausgebildete Ladeschnittstelle 9 auf. Weiter umfasst der Batteriekasten 1 einen ersten elektrischen Leiter 10 und einen weiteren elektrischen Leiter 11 (siehe Fig. 3). Mittels des ersten elektrischen Leiters 10 wird eine elektrische Verbindung zwischen der Ladeschnittstelle 9 des Ladestutzens 7 und einer elektrischen Schnittstelle 12 des Batteriekastens 1 hergestellt.

In Fig. 3 ist dargestellt, dass hierzu der erste elektrische Leiter 10 innerhalb des rohrförmig ausgebildeten Ladestutzens 7 von der Ladeschnittstelle 9 des Ladestutzens 7 zum Batteriekastenkörper 5 geführt wird. Mittels des weiteren elektrischen Leiters 11 ist eine elektrische Verbindung zwischen der Ladeschnittstelle 9 des Ladestutzens 7 und einer weiteren, nicht dargestellten, elektrischen Schnittstelle des Elektro- oder Hybridfahrzeugs 30 herstellbar, wobei der weitere elektrische Leiter 11 mittels des Ladestutzens 7 von der Ladeschnittstelle 9 des Ladestutzens 7 zum Batteriekastenkörper 5 geführt wird. Allerdings wird der weitere elektrische Leiter 11 nicht wie der erste elektrische Leiter 10 an eine elektrische Schnittstelle 12 des Batteriekastens 5 angeschlossen, sondern durch eine Zusatzöffnung 13 aus dem Ladestutzen 7 herausgeführt. Weiter wird der weitere elektrische Leiter 11, wie in Fig. 1 dargestellt, entlang des Batteriekastenkörpers 5 zu einem Frontbereich des Elektro- oder Hybridfahrzeugs 30 geführt. Hierzu wird der weitere elektrische Leiter 11 in vorbestimmten Befestigungsabschnitten 14 am Batteriekastenkörper 5 befestigt. In weiteren Befestigungsabschnitten 15 wird der weitere elektrische Leiter 11 nach dem Einfahren des Batteriekastens 1 in die Karosserie 6 an der Karosserie 6 befestigt.

In Fig. 3 ist dargestellt, dass der Ladestutzen 7 an dem karosserieseitigen Ende eine karosserieseitige Öffnung 16 und dem batteriekastenseitigen Ende eine batterieseitige Öffnung 17 aufweist, wobei der Ladestutzen 7 an einem batteriekastenseitigen Ende die Zusatzöffnung 13 aufweist.

Anhand von Fig. 2 wird ein erfindungsgemäßes Verfahren zur Montage eines Batteriekastens 1 in einem Elektro- oder Hybridfahrzeug 30 erläutert.

In einem ersten Schritt wird der Batteriekasten 1 auf einem Fahrwerkrahmen 18 angeordnet, auf dem noch weitere Fahrzeugteile angeordnet, z.B. eine Hinterachse 19, sind. In einem zweiten Schritt wird die karosserieseitige Ladeschnittstelle 9 des Ladestutzens 7 mittels der elektrischen Leiter 10, 11 mit elektrischen Schnittstellen 12 des Elektro- oder Hybridfahrzeugs 30 verbunden (siehe Fig. 3). Hierbei werden die elektrischen Leiter 10, 11 in dem Ladestutzen 7 geführt, wobei der weitere elektrische Leiter 11 zusätzlich noch entlang des Batteriekastenkörpers 5 von einem Heckbereich des Elektrofahrzeugs 30 zu einem Frontbereich des Elektrofahrzeugs 30 geführt wird. In einem dritten Schritt wird der Fahrwerkrahmen 18 in eine Karosserie 6 eingefahren, wobei in einem vierten Schritt die karosserieseitige Ladeschnittstelle 9 des Ladestutzens 7 an der Karosserie 6 im Bereich der Ladesteckeröffnung 8 befestigt wird. Weiter dargestellt ist eine Ladeklappe 20, die zum Verschließen der Ladesteckeröffnung 8 dient.

### Bezugszeichenliste

- 1: Batteriekasten
- 2: heckseitiger Teil
- 3: frontseitiger Teil
- 4: Mittelteil
- 5: Batteriekastenkörper
- 6: Karosserie
- 7: Ladestutzen
- 8: Ladesteckeröffnung
- 9: Ladeschnittstelle
- 10: erster elektrischer Leiter
- 11: weiterer elektrischer Leiter
- 12: elektrische Schnittstelle
- 13: Zusatzöffnung
- 14: Befestigungsabschnitt
- 15: weiterer Befestigungsabschnitt
- 16: karosserieseitige Öffnung
- 17: batteriekastenseitige Öffnung
- 18: Fahrwerkrahmen
- 19: Hinterachse
- 20: Ladeklappe
- 30: Elektro- oder Hybridfahrzeug

## Patentansprüche

1. Batteriekasten eines Elektro- oder Hybridfahrzeugs (30), wobei das Elektro- oder Hybridfahrzeug eine Karosserie (6) aufweist, wobei der Batteriekasten (1) innerhalb der Karosserie (6) anordenbar ist, wobei der Batteriekasten (1) mindestens einen Batteriekastenkörper (5) aufweist,
**dadurch gekennzeichnet, dass**
der Batteriekasten (1) einen Ladestutzen (7) aufweist, wobei der Batteriekasten (5) derart in der Karosserie (6) des Elektro- oder Hybridfahrzeugs (30) anordenbar ist, dass der Ladestutzen (7) eine Ladesteckeröffnung (8) der Karosserie (6) mit dem Batteriekastenkörper (5) verbindet.

2. Batteriekasten nach Anspruch 1, **dadurch gekennzeichnet, dass** der Ladestutzen (7) an einem karosserieseitigen Ende des Ladestutzens (7) eine Ladeschnittstelle (9) aufweist.

3. Batteriekasten nach einem der Ansprüche 1 oder 2, **dadurch gekennzeichnet, dass** der Batteriekasten (1) zusätzlich mindestens einen ersten elektrischen Leiter (10) umfasst, wobei mittels des ersten elektrischen Leiters (10) eine elektrische Verbindung zwischen dem karosserieseitigen Ende des Ladestutzens (7) und einer elektrischen Schnittstelle (12) innerhalb des Elektro- oder Hybridfahrzeugs (30) herstellbar ist, wobei der erste elektrische Leiter (10) mittels des Ladestutzens (7) von dem karosserieseitigen Ende des Ladestutzens (7) zum Batteriekastenkörper (5) geführt wird.

4. Batteriekasten nach einem der vorangegangenen Ansprüche, **dadurch gekennzeichnet, dass** der Ladestutzen (7) rohrförmig ausgebildet ist, wobei der Ladestutzen (7) an dem karosserieseitigen Ende eine karosserieseitige Öffnung (16) und dem batteriekastenseitigen Ende eine batterieseitige Öffnung (17) aufweist, wobei der Ladestutzen (7) an einem batteriekastenseitigen Ende mindestens eine Zusatzöffnung (13) aufweist.

5. Batteriekasten nach einem der vorangegangenen Ansprüche, **dadurch gekennzeichnet, dass** der Batteriekasten (1) einen ersten elektrischen und mindestens einen weiteren elektrischen Leiter (10, 11) umfasst, wobei mittels des ersten elektrischen Leiters (10) eine elektrische Verbindung zwischen dem karosserieseitigen Ende des Ladestutzens (7) und einer elektrischen Schnittstelle (12) des Batteriekastens (1) herstellbar ist, wobei mittels des mindestens einen weiteren elektrischen Leiters (11) eine elektrische Verbindung zwischen dem karosserieseitigen Ende des Ladestutzens (7) und einer weiteren elektrischen Schnittstelle des Elektro- oder Hybridfahrzeugs (30) herstellbar ist, wobei der erste elektrische Leiter (10) mittels des Ladestutzens (7) von dem karosserieseitigen Ende des Ladestutzens (7) zur elektrischen Schnittstelle (12) des Batteriekastens (1) geführt wird, wobei der mindestens eine weitere elektrische Leiter (11) mittels des Ladestutzens (7) von dem karosserieseitigen Ende des Ladestutzens (7) zum Batteriekastenkörper (5) geführt wird, wobei der mindestens eine weitere elektrische Leiter (11) durch eine batterieseitige Öffnung (17) oder eine Zusatzöffnung (13) aus dem Ladestutzen (7) herausgeführt wird.

6. Batteriekasten nach einem der vorangegangenen Ansprüche, **dadurch gekennzeichnet, dass** der Ladestutzen (7) rohrförmig ausgebildet ist, wobei der Ladestutzen (7) mindestens zwei räumlich getrennte Führungskanäle aufweist oder ausbildet.

7. Elektro- oder Hybridfahrzeug (30), mit einem Batteriekasten (1) nach einem der Ansprüche 1 bis 6.

8. Verfahren zur Montage eines Batteriekastens (1) in einem Elektro- oder Hybridfahrzeug, wobei der Batteriekasten (1) einen Batteriekastenkörper (5) und einen Ladestutzen (7) aufweist, wobei der Ladestutzen (7) an einem karosserieseitigen Ende des Ladestutzens (7) eine Ladeschnittstelle (9) aufweist, wobei in einem ersten Schritt der Batteriekasten (1) auf einem Fahrwerkrahmen (18) angeordnet wird, wobei in einem zweiten Schritt an die karosserieseitige Ladeschnittstelle (9) des Ladestutzens (7) mindestens ein elektrischer Leiter (10, 11) angeschlossen wird, wobei der elektrische Leiter (10, 11) in oder an dem Ladestutzen (7) zum Batteriekastenkörper (5) geführt wird, wobei in einem dritten Schritt der Fahrwerkrahmen (18) in die Karosserie (6) eingefahren wird, wobei in einem vierten Schritt die karosserieseitige Ladeschnittstelle (9) des Ladestutzens (7) an der Karosserie (6) befestigt wird.

9. Verfahren nach Anspruch 8, **dadurch gekennzeichnet, dass** in dem zweiten Schritt die karosserieseitige Ladeschnittstelle (9) des Ladestutzens (7) mittels eines ersten elektrischen Leiters (10) mit einer elektrischen Schnittstelle (12) des Batteriekastens (1) verbunden wird und/oder die karosserieseitige Ladeschnittstelle (9) des Ladestutzens (7) mittels eines weiteren elektrischen Leiters (11) mit einer weiteren elektrischen Schnittstelle des Elektro- oder Hybridfahrzeugs (30) verbunden wird.

## Claims

1. Battery box of an electric or hybrid vehicle (30), wherein the electric or hybrid vehicle has a vehicle body (6), wherein the battery box (1) can be arranged within the vehicle body (6), wherein the battery box (1) has at least one battery box body (5),
**characterized in that**
the battery box (1) has a charge connector (7), wherein the battery box (5) can be arranged in the vehicle body (6) of the electric or hybrid vehicle (30) in such a way that the charge connector (7) connects a charging plug opening (8) in the vehicle body (6) to the battery box body (5).

2. Battery box according to Claim 1, **characterized in that** the charge connector (7) has a charging interface (9) at a vehicle-body-side end of the charge connector (7).

3. Battery box according to one of Claims 1 or 2, **characterized in that** the battery body (1) additionally comprises at least one first electrical conductor (10), wherein an electrical connection between the vehicle-body-side end of the charge connector (7) and an electrical interface (12) within the electric or hybrid vehicle (10) can be established by means of the first electrical conductor (10), wherein the first electrical conductor (10) is guided to the battery box body (5) from the vehicle-body-side end of the charge connector (10) by means of the charge connector (7).

4. Battery box according to one of the preceding claims, **characterized in that** the charge connector (7) is embodied in a tubular shape, wherein the charge connector (7) has a vehicle-body-side opening (16) at the vehicle-body-side end, and a battery-side opening (17) at the battery-box-side end, wherein the charge connector (7) has at least one additional opening (13) at a battery-box-side end.

5. Battery box according to one of the preceding claims, **characterized in that** the battery box (1) comprises a first electrical conductor, and at least one further electrical conductor (10, 11), wherein an electrical connection between the vehicle-body-side end of the charge connector (7) and an electrical interface (12) of the battery box (1) can be established by means of the first electrical conductor (10), wherein an electrical connection between the vehicle-body-side end of the charge connector (7) and a further electrical interface of the electric or hybrid vehicle (30) can be established by means of the at least one further electrical conductor (11), wherein the first electrical conductor (10) is guided to the electrical interface (12) of the battery box (1) from the vehicle-body-side end of the charge connector (7) by means of the charge connector (7), wherein the at least one further electrical conductor (11) is guided to the battery box body (5) from the vehicle-body-side end of the charge connector (7) by means of the charge connector (7), wherein the at least one further electrical conductor (11) is led out of the charge connector (7) through a battery-side opening (17) or an additional opening (13).

6. Battery box according to one of the preceding claims, **characterized in that** the charge connector (7) is embodied in a tubular shape, wherein the charge connector (7) has or forms at least two spatially separate guide ducts.

7. Electric or hybrid vehicle (30) having a battery box (1) according to one of Claims 1 to 6.

8. Method for mounting a battery box (1) in an electric or hybrid vehicle, wherein the battery box (1) has a battery box body (5) and a charge connector (7), wherein the charge connector (7) has a charging interface (9) at a vehicle-body-side end of the charge connector (7), wherein in a first step the battery box (1) is arranged on a chassis frame (18), wherein in a second step at least one electrical conductor (10, 11) is connected to the vehicle-body-side charging interface (9) of the charge connector (7), wherein the electrical conductor (10, 11) is guided to the battery box body (5) in or on the charge connector (7), wherein in a third step the chassis frame (18) is moved into the vehicle body (6), wherein in a fourth step the vehicle-body-side charging interface (9) of the charge connector (7) is attached to the vehicle body (6).

9. Method according to Claim 8, **characterized in that** in the second step the vehicle-body-side charging interface (9) of the charge connector (7) is connected to an electrical interface (12) of the battery box (1) by means of a first electrical conductor (10), and/or the vehicle-side charging interface (9) of the charge connector (7) is connected to a further electrical interface of the electric or hybrid vehicle (11) by means of a further electrical conductor (11).

## Revendications

1. Caisson de batterie d'un véhicule électrique ou hybride (30), le véhicule électrique ou hybride possédant une carrosserie (6), le caisson de batterie (1) pouvant être disposé à l'intérieur de la carrosserie (6), le caisson de batterie (1) possédant au moins un corps de caisson de batterie (5),
**caractérisé en ce que**
le caisson de batterie (1) possède un manchon de charge (7), le caisson de batterie (1) pouvant être disposé dans la carrosserie (6) du véhicule électrique ou hybride (30) de telle sorte que le manchon de charge (7) relie une ouverture de fiche de charge (8) de la carrosserie (6) au corps de caisson de batterie (5).

2. Caisson de batterie selon la revendication 1, **caractérisé en ce que** le manchon de charge (7) possède à une extrémité côté carrosserie du manchon de charge (7) une interface de charge (9).

3. Caisson de batterie selon l'une des revendications 1 ou 2, **caractérisé en ce que** le caisson de batterie (1) comprend en plus au moins un premier conducteur électrique (10), une liaison électrique entre l'extrémité côté carrosserie du manchon de charge (7) et une interface électrique (12) à l'intérieur du véhicule électrique ou hybride (30) pouvant être établie au moyen du premier conducteur électrique (10), le premier conducteur électrique (10) étant acheminé au moyen du manchon de charge (7) de l'extrémité côté carrosserie du manchon de charge (7) au corps de caisson de batterie (5).

4. Caisson de batterie selon l'une des revendications précédentes, **caractérisé en ce que** le manchon de charge (7) est de configuration tubulaire, le manchon de charge (7) possédant à l'extrémité côté carrosserie une ouverture côté carrosserie (16) et à l'extrémité côté caisson de batterie une ouverture côté batterie (17), le manchon de charge (7) possédant à une extrémité côté caisson de batterie au moins une ouverture supplémentaire (13).

5. Caisson de batterie selon l'une des revendications précédentes, **caractérisé en ce que** le caisson de batterie (1) comprend un conducteur électrique et au moins un conducteur électrique supplémentaire (10, 11), une liaison électrique entre l'extrémité côté carrosserie du manchon de charge (7) et une interface électrique (12) du caisson de batterie (1) pouvant être établie au moyen du premier conducteur électrique (10), une liaison électrique entre l'extrémité côté carrosserie du manchon de charge (7) et une interface électrique supplémentaire du véhicule électrique ou hybride (30) pouvant être établie au moyen de l'au moins un conducteur électrique supplémentaire (11), le premier conducteur électrique (10) étant acheminé au moyen du manchon de charge (7) de l'extrémité côté carrosserie du manchon de charge (7) à l'interface électrique (12) du corps de caisson de batterie (5), l'au moins un conducteur électrique supplémentaire (11) étant acheminé au moyen du manchon de charge (7) de l'extrémité côté carrosserie du manchon de charge (7) au corps de caisson de batterie (5), l'au moins un conducteur électrique supplémentaire (11) étant acheminé hors du manchon de charge (7) par une ouverture côté batterie (17) ou une ouverture supplémentaire (13).

6. Caisson de batterie selon l'une des revendications précédentes, **caractérisé en ce que** le manchon de charge (7) est de configuration tubulaire, le manchon de charge (7) possédant ou formant au moins deux canaux de guidage séparés dans l'espace.

7. Véhicule électrique ou hybride (30) équipé d'un caisson de batterie selon l'une des revendications 1 à 6.

8. Procédé de montage d'un caisson de batterie (1) dans un véhicule électrique ou hybride (30), le caisson de batterie (1) possédant un corps de caisson de batterie (5) et un manchon de charge (7), le manchon de charge (7) possédant à une extrémité côté carrosserie du manchon de charge (7) une interface de charge (9), une première étape consistant à disposer le caisson de batterie (1) sur un châssis de roulement (18), une deuxième étape consistant à raccorder au moins un conducteur électrique (10, 11) à une interface de charge (9) côté carrosserie du manchon de charge (7), le conducteur électrique (10, 11) étant acheminé dans ou sur le manchon de charge (7) vers le corps de caisson de batterie (5), une troisième étape consistant à faire rentrer le châssis de roulement (18) dans la carrosserie (6), une quatrième étape consistant à fixer l'interface de charge (9) côté carrosserie du manchon de charge (7) à la carrosserie (6).

9. Procédé selon la revendication 8, **caractérisé en ce que** dans la deuxième étape, l'interface de charge (9) côté carrosserie du manchon de charge (7) est relié à une interface électrique (12) du caisson de batterie (1) au moyen d'un premier conducteur électrique (10) et/ou l'interface de charge (9) côté carrosserie du manchon de charge (7) est reliée à une interface électrique supplémentaire du véhicule électrique ou hybride (30) au moyen d'un conducteur électrique supplémentaire (11).
